Europäisches Patentamt

European Patent Office

Office européen des brevets

(11) Publication number : **0 517 611 B1**

# (12) EUROPEAN PATENT SPECIFICATION

(45) Date of publication of patent specification :
08.02.95 Bulletin 95/06

(51) Int. Cl.⁶ : **H01J 29/86**, H01J 29/89,
G02B 1/10

(21) Application number : 92401571.2

(22) Date of filing : 05.06.92

(54) Cathode ray tube, and method of forming a nonglare film on a display surface thereof.

(30) Priority : 07.06.91 JP 136602/91
27.12.91 JP 359413/91

(43) Date of publication of application :
09.12.92 Bulletin 92/50

(45) Publication of the grant of the patent :
08.02.95 Bulletin 95/06

(84) Designated Contracting States :
DE FR GB

(56) References cited :
FR-A- 2 629 268
SID INT.SYMP.DISGEST OF TECHNICAL PAP-
ERS vol. 20, May 1989, BALTIMORE, US pages
270 - 273 ; H KAWAMURA ET AL.: 'Combined
antistatic and antireflecting coating for CRTs'
ENGINEERING, MATERIALS AND DESIGN.
vol. 27, no. 1, January 1983, LONDON GB page
13 ; 'Screen coating reduces eyestrain'

(56) References cited :
WORLD PATENTS INDEX LATEST Week 8830,
Derwent Publications Ltd., London, GB ; AN
88-208235
ELECTRONIC COMPONENTS AND APPLI-
CATIONS. vol. 10, no. 1, 1990, EINDHOVEN NL
pages 48 - 52 ; A VAN DEN EEDEN ET AL.:
'Colour monitor tubes with magnetic-field sup-
ression and antistatic coating'

(73) Proprietor : SONY CORPORATION
7-35, Kitashinagawa 6-chome
Shinagawa-ku
Tokyo (JP)

(72) Inventor : Kojima, Kunio
c/o Sony Corporation,
7-35, Kitashinagawa 6-chome
Shinagawa-ku, Tokyo (JP)
Inventor : Setsuda, Takashi
c/o Sony Corporation,
7-35, Kitashinagawa 6-chome
Shinagawa-ku, Tokyo (JP)

(74) Representative : Thévenet, Jean-Bruno et al
Cabinet Beau de Loménie
158, rue de l'Université
F-75340 Paris Cédex 07 (FR)

## Description

BACKGROUND OF THE INVENTION

1. Field of the Invention

The present invention relates to a cathode ray tube (CRT) and a method of forming a nonglare film for use in a terminal display for a computer, a TV set, etc. according to the prior art portion of claim 1.

2. Description of Related Art

In recent years, it has increasingly been demanded to prevent the glare due to reflection of an external light on a display surface of a terminal display for a computer, a TV set, etc.

To meet this demand, there have been proposed various glare-proof means on a CRT, such as by attaching a panel formed with a metal multilayer film as an antireflection film on a front surface of the CRT, directly forming a roughness on a front panel itself of the CRT by chemical etching in order to scatter an external light, or forming a coating film on a surface of the front panel to exhibit a glare-proof effect (Japanese Patent Laid-open Publication Nos. JP-A-60109134, JP-A-60129778, JP-A-60014685 and JP-A-63080451, for example).

However, the above-mentioned prior art glare-proof means has the following drawbacks.

In the glare-proof means realized by attaching the panel formed with the metal multilayer film as the antireflection film on the front surface of the CRT, a cost is greatly increased, and such a CRT is therefore not suitable for general users.

In the glare-proof means realized by directly forming the roughness on the front panel itself by chemical etching in order to scatter an external light,the cost can be reduced but there is a problem in resolution.

Further, in the glare-proofing means realized by forming the coating film on the surface of the front panel to exhibit a glare-proof effect, there is a possibility that the quality of a reproduced image is lowered in case of applying the glare-proof means to a high-definition type CRT such as a graphic display. That is, enhancement of a glare-proof effect causes an increase in scattered light. As a result, there occurs a problem such that the surface of the front panel looks whitish at a bright place to reduce a sharpness of a reproduced image.

On the other hand, it is known to form an antistatic film on the surface of the front panel in order to prevent deposition of dust on the surface of the front panel, for example (Japanese Patent Laid-open Publication Nos. JP-A-61016452, JP-A-1251545, and JP-A-1276534, for example). In these circumstances, there has been desired a high-definition type CRT capable of exhibiting such an antistatic effect as well as the above-mentioned mentioned glare-proof effect.

Another prior art method of preparing faceplates according to the prior art portion of claim 1 is disclosed in the SID Int. Digest of Technical Papers vol. 20, May 1989, Baltimore US, pages 270-273, in an article by H. Kawamura et al. entitled "Combined antistatic and antireflecting coating for CRT's. Here, a double antireflection, antistatic faceplate coating is obtained by spin-coating techniques. The antireflection coating comprises $SiO_2$ dissolved in ethanol and ethysilicate. The antistatic coating is formed in a similar manner directly above the faceplate, using tin oxide ($SnO_2$) as a base material.

SUMMARY OF THE INVENTION

It is accordingly an object of the present invention to provide a cathode ray tube which can exhibit a glare-proof effect without lowering the quality of a reproduced image and also exhibit an antistatic effect.

According to one aspect of the present invention, a cathode ray tube having a front panel coated with a nonglare film; is characterized in that said nonglare film, having a predetermined surface roughness, has a two-layer structure consisting of a visible light absorbing layer containing a black dye and an antistatic layer containing an inorganic metal compound as a conductive agent, according to claim 1.

With this constitution, a part of light to be scattered by the nonglare film having a certain surface roughness is absorbed by the visible light absorbing layer containing the black dye. Accordingly, even when a scattered light due to an external light increases at a bright place, for example the surface of the front panel does not look whitish, thereby preventing deterioration of a reproduced image. Furthermore, static electricity generated on the front panel in the operation of the cathode ray tube is allowed to escape through the antistatic layer containing the inorganic metal compound.

Thus, the nonglare film having a two-layer structure consisting of the visible light absorbing layer and the antistatic layer is formed on the surface of the front panel. Accordingly, even when the cathode ray tube is operated at a bright place, a glare-proof effect can be exhibited without lowering the quality of a reproduced image, and an antistatic effect can also be exhibited.

Further, the present invention also provides a method of coating of coating liquid for forming a nonglare film on a front panel of a display, said coating liquid containing at least a solid content and a water absorbing solvent as defined more specifically in claim 9.

With this constitution, the coating liquid contains the water absorbing solvent in addition to the solid content. Accordingly, a drying rate of the coating liquid applied to the surface of the front panel can be slowed down by the water absorbing solvent to allow the coating liquid to flow until it is dried. As a result, when the coating liquid is dried, the roughness to be formed by the solid content becomes gentle, so that a fine roughness can be formed on the surface of the front panel.

Thus, the roughness to be formed by the solid content upon drying of the coating film becomes gentle, resulting in fineness of the roughness. Accordingly, the front panel can exhibit a glare-proof effect as maintaining clearness.

Other objects and features of the invention will be more fully understood from the following detailed description and appended dependent claims when taken with the accompanying drawings.

## BRIEF DESCRIPTION OF THE DRAWINGS

Fig. 1 is a side view, partially in section, of a cathode ray tube according to a first preferred embodiment of the present invention;

Fig. 2A is a front elevation of a front panel of a cathode ray tube according to second to fifth preferred embodiments of the present invention, illustrating a luminance distribution;

Figs. 2B and 2C are graphs illustrating a coating quantity distribution in relation to the luminance distribution shown in Fig. 2A;

Fig. 3A is side and plan views of roughness to be formed on the front panel by applying a coating liquid not containing ethylene glycol; and

Fig. 3B is side and plan views similar to Fig. 3A, in case of applying a coating liquid containing ethylene glycol.

## DETAILED DESCRIPTION OF THE PREFERRED EMBODIMENTS

There will now be described some preferred embodiments of the present invention with reference to the drawings.

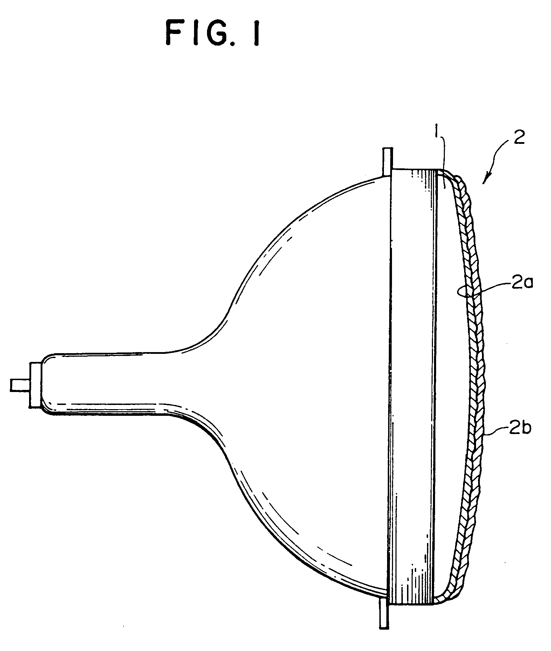

Fig. 1 is a side view, partially in section, of a cathode ray tube (CRT) according to a first preferred embodiment of the present invention. The CRT illustrated is of a high-definition type to be applied to a terminal display for a computer, for example. While a known electron gun or the like (not shown) is provided in the CRT, the detailed explanation thereof will be omitted because it is not directly related to the scope of the present invention.

Referring to Fig. 1, reference numeral 1 denotes a front panel of the CRT, and reference numeral 2 denotes a nonglare film formed on the front panel 1 by a method to be hereinafter described. The nonglare film 2 serves to prevent the glare due to a scattered light. The nonglare film 2 has a two-layer structure consisting of a visible light absorbing layer 2a formed on the front panel 1 and an antistatic layer 2b formed on the visible light absorbing layer 2a. The visible light absorbing layer 2a contains a black dye to prevent that the front panel 1 looks whitish at a bright place, and the antistatic layer 2b contains an inorganic metal compound to prevent deposition of dust or the like, electrical shock, etc. due to static electricity.

A forming method for the nonglare film 2 will now be described.

First, the front panel 1 of the CRT completed by an ordinary process is heated for drying at 100°C or lower, preferably 30 - 60°C. Then, an ethyl silicate solution containing 0.1 - 0.5 wt% of a black dye, which is primarily composed of C.I. solvent Black 5 (RTM), and 1 - 10 wt% of $SiO_2$ for scattering of light is sprayed onto a surface of the front panel 1 at a flow rate of 0.2 - 0.5 ml/sec.

Thus, the surface of the front panel 1 is subjected to glare-proof treatment so that a surface roughness may become $R_{max} \leq 0.3$ μm and $R_z \leq 0.2$ μm, (expressed in terms of average height of surface projections) and that a visible light absorptivity by the black dye may become 10 - 30 % (assuming that the absorptivity is 0 % in the absence of the black dye). In this way, the visible light absorbing layer 2a is formed.

In the next step, an ethyl silicate solution containing 40 - 60 wt% of powder of metal oxide such as tin oxide or indium oxide as a conductive agent in a solid content and 1 - 10 wt% of powder of $SiO_2$ is sprayed onto the visible light absorbing layer 2a formed on the surface of the front panel 1 at a flow rate of 0.2 - 0.5 ml/sec.

A particle size of the powder of the metal oxide is preferably not larger than 0.01 μm. If the particle size is larger than 0.01 μm, the surface roughness becomes too large. In this way, the antistatic layer 2b is formed.

A concentration of $SiO_2$ in the ethyl silicate solution is preferably about several wt%. This is due to the fact that if the concentration of $SiO_2$ is small, the times of coating increase to reduce a production efficiency, while if the concentration of $SiO_2$ is large, a coating film becomes ununiform.

In the next step, the coating film is baked at 150 - 200°C for 10 - 30 minutes to vaporize an ethyl component of the coating liquid, thus completing the nonglare film 2 having a two-layer structure. A thickness of the nonglare film 2 (i.e., a total thickness of the visible light absorbing layer 2a and the antistatic layer 2b) is preferably about 0.5 μm.

An example of the above forming method for the nonglare film 2 will now be described more concretely.

First, the surface of the front panel 1 of a 20-inch CRT is cleaned, and it is then preheated at 45°C for 10 minutes.

Then, an ethyl silicate solution is sprayed onto the surface of the front panel 1 to form the nonglare film 2. In this case, each of the visible light absorbing layer 2a and the antistatic layer 2b is formed by spraying the ethyl silicate solution for 50 seconds with a distance between the surface of the front panel 1 and a spray nozzle (not shown) set to 23 cm.

The ethyl silicate solution for forming the visible light absorbing layer 2a contains 0.3 wt% of a black dye and 5 wt% of $SiO_2$, while the ethyl silicate solution for forming the antistatic layer 2b contains 50 wt% of metal oxide as a conductive agent in a solid content and 3 wt% of $SiO_2$.

Thereafter, the coating film is baked at 170°C for 20 minutes to form the nonglare film 2 having a fine surface roughness. Each of the visible light absorbing layer 2a and the antistatic layer 2b has a thickness of about 0.25 μm. Further, a visible light absorptivity of the nonglare film 2 is about 30 %.

According to the first preferred embodiment mentioned above, a part of the light to be scattered by the nonglare film 2 having the above-mentioned surface roughness is absorbed by the visible light absorbing layer 2a. Accordingly, even when the CRT is used at a bright place exposed to a large quantity of external light, the surface of the front panel 1 does not look whitish, thereby preventing a reduction in sharpness of a reproduced image.

Furthermore, static electricity generated on the front panel 1 during operation of the CRT can be escaped through the antistatic layer 2b to the outside, thereby preventing deposition of dust, electrical shock, etc. due to charging of the front panel 1.

While about 50 wt% of metal oxide is contained in a solid content of the antistatic layer 2b, the nonglare film 2 has a strength durable to long-term usage since it has a two-layer structure.

Further, it has been confirmed that the CRT in the first preferred embodiment has a resolution of 60 lines/cm or more, thus proving that there is no problem also in resolution.

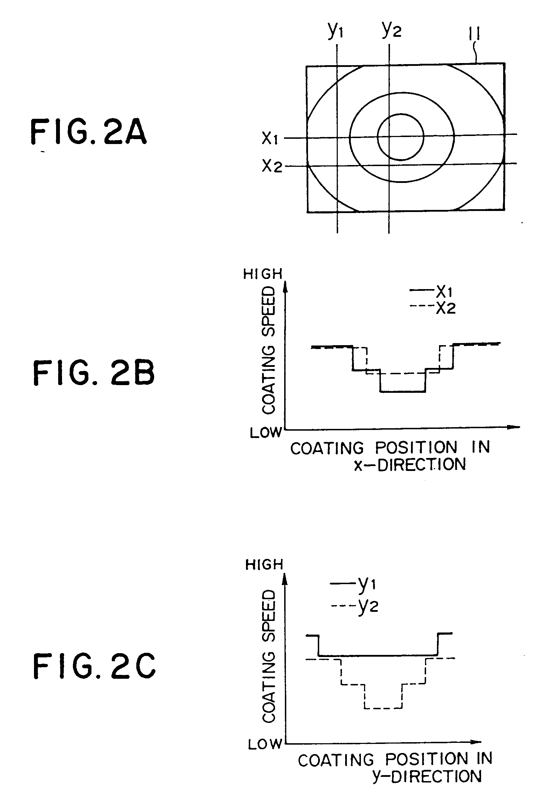

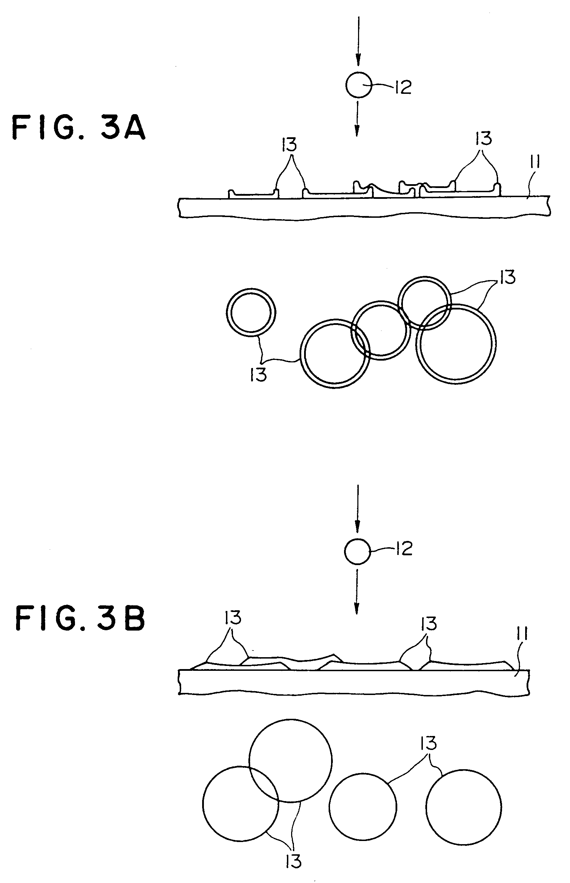

There will now be described second to fifth preferred embodiments of the present invention relating to a coating liquid and a coating method therefor applied to the glare-proof treatment of a front panel of a CRT, with reference to Figs. 2 and 3.

In the second preferred embodiment, a CRT already completed is employed, and a front panel of the CRT has a certain luminance distribution. That is, as shown in Fig. 2A, a front panel 11 of the CRT has a luminance distribution showing a contour line such that a luminance is high at a central portion and it is low at a peripheral portion. In a first step of the glare-proof treatment of the front panel 11 of the CRT, a surface of the front panel 11 is polished with cerium oxide, and the cerium oxide is then removed to thereby clean the surface of the front panel 11.

Then, the front panel 11 is preheated to about 40°C for about 10 minutes. Such a preheating step is carried out for the purpose of slowing a drying rate of a coating liquid to be applied to the front panel 11 later. Further, the temperature of 40°C is a temperature controllable through all seasons. If the drying rate of the coating liquid is excessively slowed down, the coating liquid flows to become scaly, so that is cannot be put into practical use. For these reasons, the temperature of about 40°C is an optimum temperature for preheating of the front panel 11.

In the next step, a coating liquid is sprayed onto the surface of the front panel 11 by using a spray coating device of a two-fluid air atomizing type. The coating liquid is an ethyl silicate solution containing 0.3 wt% of a black dye (C.I. solvent Black 5 (registered trade mark)), 3.0 wt% of silica, and 4.0 wt% of ethylene glycol.

In this case, the coating conditions are a spray air pressure of 2.0 kg/cm², an average particle size of the atomized liquid of 20 μm, a standard deviation of the particle size of 5 μm, a spraying rate of 0.4 ml/sec, a spraying time of 50 sec for the entire surface of the front surface 11 of a 20-inch CRT, and a distance of 330 mm between a nozzle of the spray coating device and the surface of the front panel 11.

Further, a coating speed of a coating robot is controlled as shown in Figs. 2B and 2C so that a coating quantity distribution may be related with the luminance distribution of the front panel 11 shown in Fig. 2A in such a manner that a coating quantity is increased at the central portion having a high luminance and is decreased at the peripheral portion having a low luminance. Then, the CRT is heated by radiation until a temperature of the surface of the front panel 11 becomes about 140°C, thus drying the coating liquid sprayed onto the surface of the front panel 11 to form a coating film.

In the CRT manufactured according to the second preferred embodiment, a density of the black dye contained in the coating film formed on the front panel 11 is high at the central portion of the front panel 11 and is low at the peripheral portion thereof. Such a difference in density of the black dye causes a difference in light transmittance. This difference in light transmittance and a difference in light transmittance shown in Fig. 2A counterbalance each other, so that the luminance and the contrast throughout the front panel 11 become uniform. Further, since silica is contained in the coating liquid, fine roughness is formed on a surface of the coating film, so that the coating film serves as a nonglare layer to exhibit a glare-proof effect so that reflection of the background on the front panel 11 is suppressed.

Referring to Fig. 3A, if a coating liquid 12 does not contain ethylene glycol as the water absorbing solvent according to the present invention, roughness 13 to be formed on the surface of the front panel 11 by the silica becomes unduly large to cause a defect so that irregular reflection of an external light becomes unduly strong. As a result, the surface of the front panel 11 looks whitish like a frosted glass.

To the contrary, according to the second preferred embodiment, since the coating liquid 12 contains ethylene glycol, a drying rate of the coating liquid 12 sprayed onto the surface of the front panel 11 is slowed down. As a result, the roughness 13 to be formed by the silica becomes gentle as shown in Fig. 3B, thereby providing clearness of the coating film as well as the glare-proof effect. The water absorbing solvent according to the present invention is not limited to ethylene glycol. For example, the water absorbing solvent may include glycerol, diethylene glycol, propylene glycol, triethylene glycol, and hexylene glycol.

Next, the third preferred embodiment will be described. In the third preferred embodiment, the above-mentioned coating liquid is sprayed onto the surface of the front panel 11 in the same manner as that in the second preferred embodiment to form a first layer, and thereafter another coating liquid is sprayed onto the first layer to form a second layer.

The coating liquid for forming the second layer does not contain a dye but contains 50 wt% of a conductive agent in a solid content. The other components of the coating liquid are the same as those of the coating liquid for forming the first layer. The coating conditions of the coating liquid for the second layer are substantially the same as those of the coating liquid for the first layer, but a temperature of the surface of the front panel 11 is lowered to about 25°C by the coating liquid for the first layer. After spraying the coating liquid for the second layer, it is dried in the same manner as that in the second preferred embodiment.

In the CRT manufactured according to the third preferred embodiment, the coating film formed on the surface of the front panel 11 has an electrical resistance of $1 \times 10^9 - 5 \times 10^9 \Omega$. That is, the coating film has a conductivity to exhibit an antistatic effect. Further, the coating film has a glossiness (relative to that of a reference block of glass having a refractive index of 1.567 and exhibiting a glossiness normalised to 100 for specular reflections) (gloss value) of 90 in case of an incident angle of 60°.

Next, the fourth preferred embodiment will be described. In the fourth preferred embodiment, the coating liquid for the second layer is substantially the same as that in the third preferred embodiment with the exception that ethylene glycol is not contained. Furthermore, the coating conditions of the coating liquid for the second layer are substantially the same as those in the third preferred embodiment with the exception that the spray air pressure is set to 3.5 kg/cm$^2$.

In the CRT manufactured according to the fourth preferred embodiment, the electrical resistance of the coating film formed on the surface of the front panel 11 is the same as that in the third preferred embodiment. However, the glossiness in case of an incident angle of 60° is lowered to 50, but a resolution of 65 lines/cm or higher is obtained.

Next, the fifth preferred embodiment will be described. In the fifth preferred embodiment, the coating film consisting of the first and second layers is formed in the same manner as that in the third preferred embodiment with the exception that the drying condition of the coating liquid after spray for forming the first and second layers is set to about 170°C for about 20 minutes.

In the third and fifth preferred embodiment mentioned above, the coating liquid for the second layer contains 4.0 wt% of ethylene glycol in addition to the conductive agent and the silica. A relation between the content of ethylene glycol and the determination whether or not the glare-proof effect can be exhibited as well as the clearness is shown in Table 1, in which ○ represents the answer of YES, and × represents the answer of NO. As apparent from Table 1, the content of ethylene glycol is preferably 1.0 - 8.0 wt%.

Table 1

| Content (wt%) | 7-inch Flat Panel | 14-inch Panel |
|---|---|---|
| 0.25 | × | × |
| 0.5 | ○ | × |
| 1.0 | ○ | ○ |
| 2.0 | ○ | ○ |
| 4.0 | ○ | ○ |
| 8.0 | ○ | ○ |
| 10.0 | × | × |

Further, a relation between the content of ethylene glycol and the glossiness in a 29-inch CRT is shown in Table 2. As apparent from Table 2, there is a large difference in the glossiness between the presence and the absence of ethylene glycol, but there is not a large difference in the glossiness so far as ethylene glycol is contained.

Table 2

| Content (wt%) | Glossiness (Gloss Value) |
|---|---|
| 0 | 80.4 |
| 1.0 | 87.2 |
| 2.0 | 88.3 |
| 4.0 | 86.4 |
| 8.0 | 87.1 |

**Claims**

1. A cathode ray tube having a front panel (1) coated with a nonglare film (2);
   characterized in that said nonglare film (2), having a predetermined surface roughness, has a two-layer structure consisting of a visible light absorbing layer (2a) containing a black dye and an antistatic layer (2b) containing an inorganic metal compound as a conductive agent.

2. The cathode ray tube as defined in claim 1, wherein said visible light absorbing layer (2a) is formed between the front panel (1) and the antistatic layer (2b) .

3. The cathode ray tube as defined in claim 1 or 2, wherein said nonglare film (2) is comprised of a water absorbing solvent selected from the group consisting of ethylene glycol, glycerol, diethylene glycol, propylene glycol, triethylene glycol, and hexylene glycol.

4. The cathode ray tube as defined in any one of claims 1 to 3, wherein the visible light absorptivity by said black dye is 10 - 30 %.

5. The cathode ray tube as defined in any one of claims 1 to 4, wherein the particle size of said inorganic metal compound is not larger than 0.01 $\mu$m.

6. The cathode ray tube as defined in any one of claims 1 to 5, wherein said antistatic layer (2b) further contains $SiO_2$.

7. The cathode ray tube as defined in any one of claims 1 to 6, wherein said antistatic layer has a surface resistivity of 1 x $10^9$ - 5 x $10^9$ $\Omega$.

8. The cathode ray tube as defined in any one of claims 1 to 7, wherein said visible light absorbing layer (2a) further contains $SiO_2$.

9. A method of forming a nonglare film (2) having a predetermined surface roughness on a front surface of a front panel (1) of a cathode ray tube, comprising the steps of :
cleaning said front panel (1);
heating for drying said front panel at 30-60° C;
spraying a first ethyl silicate solution containing 0.1-0.5 wt% of a black dye and 1-10 wt% of $SiO_2$ onto a surface of said front panel at a flow rate of 0.2-0.5 ml/sec to form a visible light absorbing layer (2a) on the front panel;
spraying a second ethyl silicate solution containing 40-60 wt% of an inorganic metal compound as a conductive agent in a solid content and 1-10 wt% of $SiO_2$ onto a surface of said visible light absorbing layer (2a) at a flow rate of 0.2-0.5 ml/sec to form an antistatic layer (2b) on the front panel; and
baking said front panel (1) coated with said visible light absorbing layer (2a) and said antistatic layer (2b) at 150-200° C for 10-30 minutes to form said non-glare film (2) having a two-layer structure consisting of said visible light absorbing layer (2a) and said antistatic layer (2b).

## Patentansprüche

1. Kathodenstrahlröhre, die eine Frontscheibe (1) aufweist, die mit einer Blendschutzschicht (2) überzogen ist,
dadurch gekennzeichnet, daß die Blenschutzschicht (2), die eine vorgegebene Oberflächenrauhigkeit aufweist, einen Zweischicht-Aufbau aufweist, der aus einer Absorberschicht für sichtbares Licht (2a) besteht, die einen schwarzen Farbstoff enthält, und aus einer antistatischen Schicht (2b), die eine anorganische Metallverbindung als leitenden Zusatz enthält.

2. Kathodenstrahlröhre nach Anspruch 1, wobei die Absorberschicht (2a) für sichtbares Licht zwischen der Frontscheibe (1) und der antistatischen Schicht (2b) gebildet ist.

3. Kathodenstrahlröhre nach Anspruch 1 oder 2, wobei die Blendschutzschicht (2) aus einer wasserabsorbierenden Lösung besteht, die aus einer Gruppe ausgewählt wird, die aus Ethylenglykol, Glyzerin, Diethylenglykol, Methylglykol, Triethylenglykol und Hexanolglykol besteht.

4. Kathodenstrahlröhre nach einem der Ansprüche 1 bis 3, wobei der Absorptionsgrad für sichtbares Licht von dem schwarzen Farbstoff 10 bis 30% ist.

5. Kathodenstrahlröhre nach einem der Ansprüche 1 bis 4, wobei die Partikelgröße der anorganischen Metallverbindung nicht größer als 0,01 $\mu$m ist.

6. Kathodenstrahlröhre nach einem der Ansprüche 1 bis 5, wobei die antistatische Schicht (2b) zusätzlich $SiO_2$ enthält.

7. Kathodenstrahlröhre nach einem der Ansprüche 1 bis 6, wobei die antistatische Schicht einen Oberflächenwiderstand von 1 x $10^9$ - 5 x $10^9$ $\Omega$ aufweist.

8. Kathodenstrahlröhre nach einem der Ansprüche 1 bis 7, wobei die Absorberschicht (2a) für sichtbares Licht zusätzlich $SiO_2$ enthält.

9. Verfahren zur Bildung einer Blendschutzschicht (2), die eine vorgegebene Oberflächenrauhigkeit aufweist, auf einer Frontoberfläche einer Frontscheibe (1) einer Kathodenstrahlröhre, das folgende Schritte aufweist:

Reinigung der Frontscheibe (1);

Heizen, um die Frontscheibe bei 30 - 60 C zu trocknen;

Spritzen einer ersten Ethylsilikatlösung, die 0,1 - 0,5 Gewichtsprozent eines schwarzen Farbstoffs und 1 - 10 Gewichtsprozent $SiO_2$ enthält, auf eine Oberfläche der Frontscheibe mit einem Durchsatz von 0,2 - 0,5 ml/s, um eine Absorberschicht (2a) für sichtbares Licht auf der Frontscheibe zu bilden;

Spritzen einer zweiten Ethylsilikatlösung, die 40 - 60 Gewichtsprozent einer anorganischen Metallverbindung als leitenden Zusatz in einer festen Zusammensetzung und 1- 10 Gewichtsprozent $SiO_2$ enthält, auf eine Oberfläche der Absorberschicht (2a) für sichtbares Licht mit einem Durchsatz von 0,2 - 0,5 ml/s, um eine antistatische Schicht (2b) auf der Frontscheibe zu bilden; und

Brennen der Frontscheibe (1), die mit der Absorberschicht (2a) für sichtbares Licht und der antistatischen Schicht (2b) überzogen ist, 10 - 30 Minuten lang bei 150 - 200 °C, um die Blendschutzschicht (2) zu bilden, die einen ZweischichtAufbau aufweist, der aus der Absorberschicht (2a) für sichtbares Licht und der antistatischen Schicht (2b) besteht.

**Revendications**

1. Tube à rayons cathodiques possédant un panneau avant (1) revêtu d'une pellicule antiéblouissement (2) ;
caractérisé en ce que ladite pellicule antiéblouissement (2), ayant une rugosité de surface prédéterminée, possède une structure à deux couches constituée d'une couche d'absorption de la lumière visible (2a) contenant un colorant noir et d'une couche antistatique (2b) contenant un composé métallique inorganique en tant qu'agent conducteur.

2. Tube à rayons cathodiques selon la revendication 1, dans lequel ladite couche d'absorption de la lumière visible (2a) est formée entre le panneau avant (1) et la couche antistatique (2b).

3. Tube à rayons cathodiques selon la revendication 1 ou 2, dans lequel ladite pellicule antiéblouissement (2) comprend un solvant absorbant l'eau, choisi dans le groupe constitué de l'éthylèneglycol, du glycérol, du diéthylèneglycol, du propylèneglycol, du triéthylèneglycol et de l'hexylèneglycol.

4. Tube à rayons cathodiques selon l'une quelconque des revendications 1 à 3, dans lequel l'absorptivité de la lumière visible dudit colorant noir est 10 à 30%.

5. Tube à rayons cathodiques selon l'une quelconque des revendications 1 à 4, dans lequel la dimension de particules dudit composé métallique inorganique est inférieure ou égale à 0,01 $\mu$m.

6. Tube à rayons cathodiques selon l'une quelconque des revendications 1 à 5, dans lequel ladite couche antistatique (2b) contient de plus du $SiO_2$.

7. Tube à rayons cathodiques selon l'une quelconque des revendications 1 à 6, dans lequel la couche antistatique a une résistivité de surface comprise entre $1 \times 10^9$ et $5 \times 10^9$ $\Omega$.

8. Tube à rayons cathodiques selon l'une quelconque des revendications 1 à 7, dans lequel ladite couche d'absorption de la lumière visible (2a) contient de plus du $SiO_2$.

9. Procédé de formation d'une pellicule antiéblouissement (2), ayant une rugosité de surface prédéterminée, sur la surface avant du panneau avant (1) d'un tube à rayons cathodiques, comprenant les étapes consistant à :

nettoyer ledit panneau avant (1) ;

chauffer dans un but de séchage ledit panneau avant (1) à une température comprise entre 30 et 60°C ;

pulvériser une première solution de silicate d'éthyle contenant 0,1 à 0,5 % en masse d'un colorant noir et 1 à 10 % en masse de $SiO_2$, sur la surface dudit panneau avant, à un débit de 0,2 à 0,5 ml/s afin de former une couche d'absorption de la lumière visible (2a) sur le panneau avant ;

pulvériser une seconde solution de silicate d'éthyle contenant 40 à 60 % en masse de la teneur en matière solide d'un composé métallique inorganique en tant qu'agent conducteur et 1 à 10 % en masse

de SiO$_2$ sur la surface de ladite couche d'absorption de la lumière visible (2a) à un débit de 0,2 à 0,5 ml/s de façon à former une couche antistatique (2b) sur le panneau avant ; et

cuire ledit panneau avant (1) revêtu de ladite couche d'absorption de la lumière visible (2a) et de ladite couche antistatique (2b) à une température comprise entre 150 et 200°C pendant 10 à 30 min afin de former ladite pellicule antiéblouissement (2) ayant une structure à deux couches, constituée de ladite couche d'absorption de la lumière visible (2a) et de ladite couche antistatique (2b).

# FIG. 1

FIG. 2A

FIG. 2B

**HIGH**

COATING SPEED

—— X₁
---- X₂

**LOW**

COATING POSITION IN
x-DIRECTION

FIG. 2C

**HIGH**

COATING SPEED

—— y₁
---- y₂

**LOW**

COATING POSITION IN
y-DIRECTION

11

FIG. 3A

FIG. 3B